# EUROPÄISCHE PATENTANMELDUNG

(11) **EP 3 162 677 A1**
(43) Veröffentlichungstag der Anmeldung: **03.05.2017**
(21) Anmeldenummer: 16194413.7
(22) Anmeldetag: 18.10.2016
(51) Int. Cl.: B62H 5/00, B62K 25/02, E05B 71/00, F16B 41/00

(54) **SICHERUNGSEINRICHTUNG**

(30) Priorität: 27.10.2015 DE 102015118311
(71) Anmelder: ABUS August Bremicker Söhne KG, 58300 Wetter-Volmarstein (DE)
(72) Erfinder: Kuchler, Marcus, 81675 München (DE)
(74) Vertreter: Manitz Finsterwald Patentanwälte PartmbB

(57) **Zusammenfassung**

Sicherungseinrichtung (13) zur Sicherung einer Komponente an einem Objekt, umfassend ein Befestigungselement (23) mit einem Angriffsabschnitt (31) und einer Längsachse (L), wobei das Befestigungselement (23) durch Betätigung des Angriffsabschnitts (31) wahlweise mit einem Gegenelement (15) verbindbar ist, um in einem verbundenen Zustand die Komponente an dem Objekt zu befestigen und in einem gelösten Zustand die Komponente für ein Lösen von dem Objekt freizugeben; und eine Abdeckhülse (25), die zwischen einer Geschlossenstellung, in der die Abdeckhülse (25) eine Betätigung des Angriffsabschnitts (31) verhindert, und einer Offenstellung, in der die Abdeckhülse (25) eine Betätigung des Angriffsabschnitts (31) zulässt, beweglich an dem Befestigungselement (23) gelagert ist; wobei zwischen dem Befestigungselement (23) und der Abdeckhülse (25) zumindest ein Blockierelement (33) vorgesehen ist, welches in der Geschlossenstellung der Abdeckhülse (25) zwischen einer Verriegelungsstellung, in der es die Abdeckhülse (25) in der Geschlossenstellung sperrt, und einer Entriegelungsstellung, in der es ein Bewegen der Abdeckhülse (25) in die Offenstellung zulässt, frei beweglich ist; wobei das Blockierelement (33) derart zwischen dem Befestigungselement (23) und der Abdeckhülse (25) gelagert ist, dass es, wenn sich die Abdeckhülse (23) in der Geschlossenstellung befindet, in einer Normalausrichtung der Längsachse (L) des Befestigungselements (23) gravitationsbedingt die Verriegelungsstellung einnimmt und in einer zu der Normalausrichtung senkrechten Montageausrichtung der Längsachse (L) des Befestigungselements (23) gravitationsbedingt die Entriegelungsstellung einnimmt.

## Beschreibung

Die vorliegende Erfindung betrifft eine Sicherungseinrichtung zur Sicherung einer Komponente an einem Objekt, insbesondere an einem Zweirad.

Allgemein ist es bekannt, ein Zweirad gegen Diebstahl dadurch zu sichern, dass das Zweirad an einem ortsfesten Gegenstand angeschlossen wird. Dabei werden jedoch nicht alle Komponenten des Zweirads unmittelbar angeschlossen, sondern typischerweise lediglich zumindest der Rahmen und gegebenenfalls eines der Räder des Zweirades. Die übrigen Komponenten sind dann, wenn überhaupt, indirekt durch ihre Befestigung an den unmittelbar gesicherten Komponenten gesichert.

Die Befestigung solcher indirekt gesicherter Komponenten ist aber grundsätzlich lösbar. Daher ist die Gefahr eines Diebstahls einer jeweiligen Komponente umso größer, je einfacher die Befestigung zu lösen ist. Eine einfache Lösbarkeit kann aber aus Komfortgründen erwünscht sein, um beispielsweise einen Austausch oder eine Verstellbarkeit der Komponente zu erleichtern. Daher sind gewisse Komponenten, insbesondere Räder, Sättel, Bremsen und Lenker, von Zweirädern oftmals mittels sogenannter Schnellspanner oder sonstiger leicht zu lösender Befestigungseinrichtungen an dem Rahmen des Zweirades befestigt. Infolgedessen kommt es vermehrt zu Diebstählen solcher Komponenten an eigentlich sicher angeschlossenen Zweirädern.

Die grundsätzliche Problematik, eine Komponente eines anderweitig in seiner Position gesicherten Objekts an diesem Objekt zuverlässig und dennoch einfach lösbar zu sichern, stellt sich dabei nicht nur bei Zweirädern.

Es ist daher eine Aufgabe der Erfindung, eine Sicherungseinrichtung zur Sicherung einer jeweiligen Komponente an einem zugeordneten Objekt bereitzustellen, die einerseits die Komponente zuverlässig gegen ein unbefugtes Lösen von dem Objekt sichern und andererseits dennoch ein einfaches Lösen der Komponente ermöglichen kann.

Die Aufgabe wird gelöst durch eine Sicherungseinrichtung mit den Merkmalen des Anspruchs 1 und insbesondere dadurch, dass die Sicherungseinrichtung ein Befestigungselement mit einem Angriffsabschnitt und einer Längsachse sowie eine Abdeckhülse umfasst; wobei das Befestigungselement durch Betätigung des Angriffsabschnitts wahlweise mit einem Gegenelement verbindbar ist, um in einem verbundenen Zustand die Komponente an dem Objekt zu befestigen und in einem gelösten Zustand die Komponente für ein Lösen von dem Obekt freizugeben; wobei die Abdeckhülse zwischen einer Geschlossenstellung, in der die Abdeckhülse eine Betätigung des Angriffsabschnitts verhindert, und einer Offenstellung, in der die Abdeckhülse eine Betätigung des Angriffsabschnitts zulässt, beweglich an dem Befestigungselement gelagert ist; wobei zwischen dem Befestigungselement und der Abdeckhülse zumindest ein Blockierelement vorgesehen ist, welches in der Geschlossenstellung der Abdeckhülse zwischen einer Verriegelungsstellung, in der es die Abdeckhülse in der Geschlossenstellung sperrt, und einer Entriegelungsstellung, in der es ein Bewegen der Abdeckhülse in die Offenstellung zulässt, frei beweglich ist; und wobei das Blockierelement derart zwischen dem Befestigungselement und der Abdeckhülse gelagert ist, dass es, wenn sich die Abdeckhülse in der Geschlossenstellung befindet, in einer Normalausrichtung der Längsachse des Befestigungselements gravitationsbedingt die Verriegelungsstellung einnimmt und in einer zu der Normalausrichtung senkrechten Montageausrichtung der Längsachse des Befestigungselements gravitationsbedingt die Entriegelungsstellung einnimmt.

Das Befestigungselement zusammen mit der Abdeckhülse und dem Blockierelement einerseits und das Gegenelement andererseits bilden dabei insbesondere eine Befestigungseinrichtung zum Befestigen der jeweiligen Komponente an dem Objekt. Wenn es sich bei dem Objekt um ein Zweirad handelt, kann die Befestigungseinrichtung beispielsweise die Achse einer Radnabe, über die ein Rad des Zweirads an dessen Rahmen befestigt wird, oder der Spannstift einer Ringschelle sein, durch welche die Sattelstütze eines Sattels oder der Vorbauschaft eines Lenkers an dem Rahmen befestigt wird.

Das Befestigungselement kann insbesondere nach Art einer Mutter oder Schraube ausgebildet sein, die über entsprechende Gewinde mit dem Gegenelement verbindbar ist. Grundsätzlich sind aber auch andere Arten der Verbindung, z.B. rastend, klemmend und/oder exzentrisch spannend, möglich.

Die Befestigungseinrichtung kann dabei grundsätzlich einer herkömmlichen Befestigungseinrichtung sehr ähnlich sein. Insbesondere kann das Gegenelement auf bekannte Weise ausgebildet sein, so dass eine herkömmliche Befestigungseinrichtung durch Austausch des Befestigungselements gegen die erfindungsgemäße Sicherungseinrichtung nachrüstbar sein kann.

Der Erfindung bezieht sich daher zum einen auf die Sicherungseinrichtung allein, die in Verbindung mit einem geeigneten Gegenelement verwendbar ist, sowie zum anderen auf eine Befestigungseinrichtung, welche sowohl die Sicherungseinrichtung als auch das Gegenelement umfasst.

Grundsätzlich braucht das Gegenelement nicht separat von dem Objekt zu sein, an dem die jeweilige Komponente gesichert werden soll, sondern kann etwa auch integral daran ausgebildet sein. Beispielsweise kann es sich bei dem Gegenelement um eine Gewindebohrung des zugeordneten Objekts handeln, wobei das Befestigungselement einen Gewindeabschnitt aufweisen kann, der in die Gewindebohrung eingeschraubt wird. Das Gegenelement kann aber auch stiftartig ausgebildet sein und ein Außengewinde aufweisen, auf das das Befestigungselement nach Art einer Mutter aufgeschraubt wird, um die Komponente an dem Objekt zu befestigen.

Zum Verbinden des Befestigungselements mit dem Gegenelement weist das Befestigungselement den genannten Angriffsabschnitt auf, über den das Befestigungselement betätigt werden kann. Das Betätigen dient dabei dem Verbinden des Befestigungselements mit dem Gegenelement oder dem Lösen des Befestigungselements von dem Gegenelement. Für eine zuverlässige solche Betätigung des Befestigungselements kann es erforderlich sein, den Angriffsabschnitt zu verwenden.

Beispielsweise kann der Angriffsabschnitt durch ein vergleichsweise einfaches Mitnahmeprofil, wie etwa einen Außen- oder Innensechskant, gebildet sein, an den ein entsprechender (Sechskant-)Schlüssel angreifen kann. Zum Betätigen des Angriffsabschnitts ist dann kein Spezialwerkzeug erforderlich. Grundsätzlich kann der Angriffsabschnitt auch ein komplexeres Profil aufweisen. Der Angriffsabschnitt kann aber auch weniger spezifisch ausgebildet sein. So kann der Angriffsabschnitt etwa eine Mantelfläche, Außenfläche oder Oberfläche des Befestigungselements umfassen (z.B. mit einer Riffelung für eine händische Drehbetätigung). Dabei kann der Angriffsabschnitt insbesondere dadurch definiert sein, dass zumindest eine lösende Betätigung des Befestigungselements unter normalen Umständen nicht ohne Zugriff auf diesen Angriffsabschnitt möglich ist.

Um die Verbindung des Befestigungselements mit dem Gegenelement zu sichern, kann das Betätigen des Angriffsabschnitts durch die Abdeckhülse verhindert werden. Dabei ist die Betätigung dann nicht möglich, wenn sich die Abdeckhülse in ihrer Geschlossenstellung befindet, aus der sich die Abdeckhülse nicht ohne weiteres in die eine Betätigung des Angriffsabschnitts zulassende Offenstellung versetzen lässt.

Ob die Abdeckhülse in die Offenstellung versetzt werden kann oder nicht, hängt dabei davon ab, in welcher Stellung (Entriegelungsstellung bzw. Verriegelungsstellung) sich das Blockierelement befindet. Die Stellung des Blockierelements wiederum hängt davon ab, wie die Längsachse des Befestigungselements ausgerichtet ist. Denn je nach Ausrichtung der Längsachse nimmt das Blockierelement gravitationsbedingt automatisch die jeweilige der Ausrichtung entsprechende Stellung ein.

Letztlich wird die Sicherungseinrichtung also automatisch infolge der Ausrichtung der Längsachse des Befestigungselements zwischen einem verriegelten Zustand und einem entriegelten Zustand sozusagen geschaltet. Dabei entspricht die genannte Normalausrichtung vorzugsweise der Ausrichtung, welche die Längsachse des Befestigungselements in einer Gebrauchsstellung des Objekts einnimmt. Bei einem Zweirad liegt eine solche Gebrauchsstellung beispielsweise dann vor, wenn das Zweirad auf seinen beiden Rädern auf einem Untergrund steht und im Wesentlichen in einer Ebene senkrecht zum Untergrund ausgerichtet ist. Folglich ist die mittels der Sicherungseinrichtung gesicherte Komponente bei üblichem Gebrauch des Objekts in der Regel gegen ein Lösen gesichert.

Zum Entriegeln der Sicherungseinrichtung muss das Blockierelement in seine Entriegelungsstellung bewegt werden. Vorzugsweise ist das Blockierelement von außerhalb der Sicherungseinrichtung nicht zugänglich und kann daher nicht unmittelbar versetzt werden. Das Blockierelement kann daher zumindest im Wesentlichen ausschließlich dadurch in die Entriegelungsstellung bewegt werden, dass die Längsachse des Befestigungselements in die Montageausrichtung überführt wird.

Dabei muss die Montageausrichtung nicht zwingend vollständig erreicht, also die Längsachse um exakt 90° gedreht werden. Vielmehr kann das Blockierelement bereits vor Erreichen der Montageausrichtung gravitationsbedingt die Entriegelungsstellung einnehmen oder zumindest die Verriegelungsstellung verlassen. Dabei ist es aber vorteilhaft, wenn geringfügige Abweichungen von der Normalausrichtung für ein Verlassen der Verriegelungsstellung noch nicht ausreichen. Insbesondere kann zumindest eine Abweichung von ca. 45° von der Normalausrichtung erforderlich sein, damit das Blockierelement die Verriegelungsstellung verlässt.

Da die Sicherungseinrichtung bei Gebrauch in der Regel stabil an dem zugeordneten Objekt angeordnet ist, muss zum Entriegeln der Sicherungseinrichtung also das gesamte Objekt entsprechend der Montageausrichtung der Längsachse des Befestigungselements ausgerichtet werden. Das entspricht insbesondere einem Kippen des Objekts um ca. 90° aus der genannten Gebrauchsstellung. Eine solche Neuausrichtung des Objekts ist jedoch in der Regel jedenfalls dann nicht möglich, wenn das Objekt seinerseits hinreichend gesichert ist. So kann beispielsweise ein Zweirad mit an sich bekannten Mitteln eng an einem ortsfesten Gegenstand wie etwa einem Pfosten, Gitter, Zaun oder Fahrradständer angeschlossen sein, so dass es nicht um bis zu 90° auf eine seiner Seiten gekippt werden kann.

Wenn das Zweirad (bzw. ein sonstiges mit der Sicherungseinrichtung gesichertes Objekt) also auf übliche Weise abgestellt und irgendwo zuverlässig angeschlossen wird, wird damit zugleich die gewünschte Sicherung der jeweiligen Komponente erreicht. Die zusätzliche Sicherung der Komponente ergibt sich dabei insofern automatisch, als keine Verriegelungsbetätigung der Sicherungseinrichtung erforderlich ist. Vielmehr befindet sich die Sicherungseinrichtung in der Gebrauchsstellung des Zweirades grundsätzlich ohnehin in dem gesicherten Zustand. Die Sicherung der zu sichernden Komponente kann also auch nicht versehentlich vergessen werden. Durch das gewohnte Anschließen des Zweirades wird dabei die Sicherung lediglich insofern komplettiert, als dadurch ein Entriegeln der Sicherungseinrichtung verhindert wird.

Die vorteilhafte Verwendung der Sicherungseinrichtung ist nicht auf Zweiräder beschränkt. Andere Anwendungsbereiche umfassen beispielsweise die Sicherung von Komponenten an Teilen von Baumaschinen oder Baugeräten, landwirtschaftlichen Geräten, allen Arten von Kraftfahrzeugen etc., insbesondere wenn diese Teile nur durch den befugten Benutzer bewegbar sind. Dies kann beispielsweise bei einem Verschwenken einer Fahrzeug-Heckklappe nach deren Entriegelung, bei einem motorischen oder hydraulischen Verschwenken eines Trägerarms einer Baumaschine oder eines landwirtschaftlichen Geräts, oder bei einem motorischen Antrieb eines Fahrzeugrades um eine Viertelumdrehung der Fall sein.

Trotz der automatischen Sicherung der Komponente gegen ein unbefugtes Lösen von dem Objekt bleibt die Komponente auf einfache Weise von dem Objekt lösbar. Dazu braucht das Objekt (beispielsweise ein Zweirad) nur (zumindest temporär) um ca. 90° verkippt, gedreht oder geschwenkt (z.B. auf eine seiner Seiten gelegt) zu werden, um dadurch entsprechend der Montageausrichtung ausgerichtet zu werden. Infolge des Kippens bewegt sich das Blockierelement gravitationsbedingt automatisch in die Entriegelungsstellung und gibt dadurch die Abdeckhülse für ein Versetzen in die Offenstellung frei, in der dann der Angriffsabschnitt des Befestigungselements für eine lösende Betätigung des Befestigungselements zugänglich ist.

Solange die Abdeckhülse in die Offenstellung versetzt ist und in der Offenstellung gehalten wird, kann vorzugsweise die Ausrichtung der Längsachse des Befestigungselements (und somit auch die Ausrichtung des Zweirads) verändert werden (insbesondere wieder in die Normalausrichtung gebracht werden), ohne dass die Sicherungseinrichtung dadurch verriegelt wird. Erst wenn die Abdeckhülse wieder ihre Geschlossenstellung einnimmt, wird bei Normalausrichtung der Längsachse des Befestigungselements das Befestigungselement wieder durch das Blockierelement gegen eine lösende Betätigung gesperrt.

Hierdurch wird das Lösen, Verstellen bzw. Austauschen der Komponente vereinfacht. Denn das Objekt braucht nicht während des ganzen Vorgangs entsprechend der Montageausrichtung ausgerichtet zu sein. Vielmehr reicht es, wenn die Montageausrichtung kurzzeitig eingenommen wird, um die Abdeckhülse in die Offenstellung zu versetzen und den Angriffsabschnitt zugänglich zu machen. Anschließend kann das Objekt beliebig ausgerichtet werden, ohne dass der Angriffsabschnitt des Befestigungselements wieder unzugänglich würde.

Beispielsweise kann bei einem Zweirad zum Abnehmen eines Rades das Zweirad zunächst auf die Seite gelegt werden, wodurch sich die Abdeckhülse in die Offenstellung versetzen lässt, und anschließend auf Sattel und Lenkstange gestellt werden, damit das Zweirad beim Lösen des Befestigungselements (z.B. Abschrauben vom Gegenelement) und bei dem Abnehmen des Rades stabil steht. Wenn durch die Sicherungseinrichtung beispielsweise eine Ringschelle am Sattelrohr eines Zweirades gesichert wird, kann das Zweirad nach dem Versetzen der Abdeckhülse in die Offenstellung aus der Montageausrichtung gleich zurück in die Normalausrichtung aufgerichtet werden, um die Sattelhöhe verstellen zu können.

Für ein Verriegeln der Sicherungseinrichtung braucht die Montageausrichtung vorzugsweise nicht erneut eingenommen zu werden. Sobald die Abdeckhülse in die Geschlossenstellung versetzt wird, kann das Blockierelement wieder gravitationsbedingt und abhängig von der Ausrichtung der Längsachse des Befestigungselements die Verriegelungsstellung einnehmen. Wird die Abdeckhülse in der Normalausrichtung in die Geschlossenstellung versetzt, erfolgt die Verriegelung also automatisch unverzüglich.

Vorzugsweise kommt es dafür, welche Stellung (Verriegelungsstellung oder Entriegelungsstellung) das Blockierelement einnimmt, ausschließlich auf die Ausrichtung der Längsachse des Befestigungselements an, nicht aber auf die Drehausrichtung des Befestigungselements relativ zu der Längsachse. Dies hat den Vorteil, dass eine Befestigungseinrichtung mit einer solchen Sicherungseinrichtung in beliebiger Drehausrichtung zur Längsachse an dem Zweirad angeordnet werden kann. Wenn es sich bei der Befestigungseinrichtung etwa um die Achse einer Radnabe oder den Spannstift einer Ringschelle handelt, braucht bei deren Montage an dem Zweirad nicht auf eine korrekte Drehausrichtung relativ zu der Längsachse geachtet zu werden, wodurch die Montage wesentlich erleichtert wird. Dies ist insbesondere dann wichtig, wenn sich eine bestimmte Drehausrichtung des Befestigungselements automatisch als Endstellung ergibt und die Drehausrichtung des Befestigungselements bei der Montage somit nicht frei ausgewählt werden kann (z.B. beim vollständigen Eindrehen einer Schraube in eine Gewindebohrung).

Daher ist es bevorzugt, wenn das Blockierelement derart zwischen dem Befestigungselement und der Abdeckhülse gelagert ist, dass es die Verriegelungsstellung und die Entriegelungsstellung jeweils unabhängig von einer Drehausrichtung bzw. Drehstellung des Befestigungselements relativ zu der Längsachse einnimmt.

Dies hat den Vorteil, dass die Sicherungseinrichtung nicht komplizierter zu montieren ist als eine entsprechende herkömmliche Befestigungseinrichtung. Die Sicherungseinrichtung braucht nur auf übliche Weise durch Verbinden des Befestigungselements mit dem Gegenelement an dem Objekt, dessen Komponente gesichert werden soll, angebracht zu werden. Eine besondere Beachtung einer korrekten Ausrichtung relativ zu der Längsachse, insbesondere einer korrekten Drehausrichtung des Befestigungselements, ist dabei vorteilhafterweise nicht erforderlich.

Insbesondere können die Verriegelungsstellung und die Entriegelungsstellung axial und/oder radial zur Längsachse definiert und unabhängig von der Lage des Blockierelements in Umfangsrichtung zur Längsachse sein.

In der Normalausrichtung kann die Längsachse des Befestigungselements insbesondere in horizontaler Richtung verlaufen, wohingegen die Längsachse in der Montageausrichtung in vertikaler Richtung verläuft. Dadurch erfolgt die Krafteinwirkung auf das Blockierelement infolge der Gravitation in dem einen Fall parallel zur Längsachse und in dem anderen Fall senkrecht dazu. Die unterschiedlichen Krafteinwirkungen lassen sich dadurch besonders gut separieren.

Gemäß einer Ausführungsform ist die Abdeckhülse entlang der Längsachse des Befestigungselements zwischen der Geschlossenstellung und der Offenstellung beweglich an dem Befestigungselement gelagert. Die Geschlossenstellung und die Offenstellung sind also bezüglich der Längsachse axial definiert. Grundsätzlich kann die Abdeckhülse noch eine zusätzliche Beweglichkeit, etwa in Drehrichtung um die Längsachse, aufweisen, welche aber keinen Einfluss auf die Offenstellung und die Geschlossenstellung hat.

Insbesondere kann die Abdeckhülse einen Aufnahmeabschnitt aufweisen, in den das Befestigungselement aufgenommen ist, wobei der Angriffsabschnitt des Befestigungselements in der Geschlossenstellung vollständig in dem Aufnahmeabschnitt der Abdeckhülse aufgenommen ist. Eine Betätigung des Angriffsabschnitts wird folglich in der Geschlossenstellung der Abdeckhülse dadurch verhindert, dass der Angriffsabschnitt von außerhalb der Abdeckhülse nicht erreicht werden kann.

Die Abdeckhülse weist vorzugsweise eine zylinderartige Grundform auf, die hohl ausgebildet sein kann, so dass sich der Aufnahmeabschnitt im Inneren der Abdeckhülse entlang einer Zylinderachse der Grundform erstreckt. Der Aufnahmeabschnitt kann sich grundsätzlich durch die gesamte Abdeckhülse erstrecken, die dann röhrenartig zu beiden (bezogen auf die Zylinderachse) axialen Seiten offen ist. Vorzugsweise ist die Abdeckhülse jedoch zu einer axialen Seite hin verschlossen, um einen Zugriff von dieser Seite aus auf das Befestigungselement zu verhindern.

Grundsätzlich ist es vorteilhaft, wenn die Abdeckhülse zumindest bei Normalgebrauch unlösbar mit dem Befestigungselement verbunden ist, damit die Abdeckhülse nicht verloren gehen kann. Um ein Lösen der Abdeckhülse von dem Befestigungselement zu verhindern, kann beispielsweise der Aufnahmeabschnitt eine Durchmesserverringerung aufweisen, gegen die das Blockierelement anschlägt, wenn die Abdeckhülse in der Offenstellung ist. Über die Offenstellung hinaus kann die Abdeckhülse dann nicht versetzt werden. Insbesondere kann die Abdeckhülse also von dem Befestigungselement nicht abgenommen werden.

Bei einer Ausführungsform ist das Befestigungselement dazu ausgebildet, zur Verbindung mit dem Gegenelement um seine Längsachse gedreht zu werden, beispielsweise wenn das Befestigungselement funktionell nach Art einer Mutter oder einer Schraube ausgebildet ist. Dazu kann das Befestigungselement ein zur Längsachse koaxiales Gewinde aufweisen, um mit einem entsprechenden Gewinde des Gegenelements zusammenzuwirken.

Vorzugsweise ist die Abdeckhülse frei um die Längsachse drehbar an dem Befestigungselement gelagert. Ein Drehen der Abdeckhülse wird also nicht auf das Befestigungselement übertragen. Vielmehr dreht die Abdeckhülse frei durch, so dass das Befestigungselement in der Geschlossenstellung der Abdeckhülse gegen eine Drehbetätigung von außen gesichert ist.

Weiterhin ist es bevorzugt, wenn sich die Verriegelungsstellung und die Entriegelungsstellung des Blockierelements sowohl hinsichtlich ihrer radialen als auch hinsichtlich ihrer axialen Anordnung relativ zu der Längsachse unterscheiden. Ein Bewegen des Blockierelements aus der Verriegelungsstellung in die Entriegelungsstellung oder umgekehrt ist also keine rein axiale oder rein radiale Bewegung, sondern weist sowohl axiale als auch radiale Anteile auf. Dadurch kann die Beweglichkeit des Blockierelements gut an den Übergang von der Normalausrichtung in die Montageausrichtung bzw. umgekehrt angepasst sein. Insbesondere kann der Verlauf der Beweglichkeit des Blockierelements dazu ausgebildet sein, das Blockierelement zuverlässig je nach Ausrichtung gravitationsbedingt in die entsprechende Stellung zu bewegen.

Bei einer Ausführungsform sind die Verriegelungsstellung und die Entriegelungsstellung des Blockierelements in Bezug auf die Längsachse schräg, insbesondere in einem Winkel von ca. 45°, zueinander ausgerichtet. Dabei kann die Beweglichkeit des Blockierelements zwischen der Verriegelungsstellung und der Entriegelungsstellung insbesondere linear oder bogenförmig sein. Bei einer Ausrichtung von ca. 45° zur Längsachse sind der axiale und der radiale Anteil der Beweglichkeit gerade zumindest im Wesentlichen gleich groß, so dass ein Übergang von der Verriegelungsstellung in die Entriegelungsstellung oder umgekehrt im Wesentlichen gerade in der Mitte zwischen der Normalausrichtung und der Montageausrichtung erfolgt.

Vorzugsweise weist das Befestigungselement eine um die Längsachse umlaufende Außennut auf, die dazu ausgebildet ist, das Blockierelement zumindest teilweise aufzunehmen. Die Außennut kann dabei in einer Zylindermantelfläche des Befestigungselements ausgebildet und/oder rotationssymmetrisch sein. Entsprechend der vorstehend beschriebenen Beweglichkeit des Blockierelements kann ein Querschnitt der Außennut eine Längserstreckung aufweisen, die bezüglich der Längsachse des Befestigungselements zumindest abschnittsweise schräg, insbesondere in einem Winkel von ca. 45°, ausgerichtet ist.

Weiterhin ist es bevorzugt, wenn die Abdeckhülse eine um die Längsachse umlaufende Innennut aufweist, die dazu ausgebildet ist, das Blockierelement zumindest teilweise aufzunehmen. Die Innennut kann insbesondere in einer inneren Zylindermantelfläche der Abdeckhülse, die den genannten Aufnahmeabschnitt radial begrenzt, ausgebildet sein. Auch der Querschnitt der Innennut weist vorzugsweise eine Längserstreckung auf, die bezüglich der Längsachse des Befestigungselements zumindest abschnittsweise schräg, insbesondere in einem Winkel von ca. 45°, ausgerichtet ist.

Besonders vorteilhaft ist es, wenn sowohl das Befestigungselement die genannte Außennut aufweist als auch die Abdeckhülse die genannte Innennut aufweist, wobei das Blockierelement teilweise in der Außennut des Befestigungselements und teilweise in der Innennut der Abdeckhülse aufgenommen ist, wenn sich die Abdeckhülse in der Geschlossenstellung befindet und sich die Längsachse des Befestigungselements in der Normalausrichtung befindet.

In der Normalausrichtung der Längsachse des Befestigungselements nimmt das Blockierelement gravitationsbedingt automatisch die Verriegelungsstellung ein, wenn sich die Abdeckhülse in der Geschlossenstellung befindet. Die Verriegelung kann bei dieser Ausführungsform also insbesondere dadurch bewirkt werden, dass das Blockierelement sowohl in die Außennut des Befestigungselements als auch in die Innennut der Abdeckhülse eingreift. Auf diese Weise kann das Blockierelement im Zusammenwirken mit einer Seitenfläche der Außennut und einer axial entgegengesetzten Seitenfläche der Innennut ein axiales Bewegen der Abdeckhülse in die Offenstellung zu sperren.

Wenn sich dagegen die Längsachse des Befestigungselements in der Montageausrichtung befindet, ist das Blockierelement vorzugsweise zwar in der Außennut des Befestigungselements zumindest teilweise aufgenommen, greift aber nicht in die Innennut der Abdeckhülse ein. Durch die Montageausrichtung wird das Blockierelement gravitationsbedingt automatisch in die Entriegelungsstellung bewegt. Diese kann sich von der Verriegelungsstellung dann also insbesondere dadurch unterscheiden, dass das Blockierelement nicht mehr in beide Nuten (Außennut des Befestigungselements und Innennut der Abdeckhülse) eingreift, sondern nur noch in eine der beiden Nuten, vorzugsweise in die Außennut. Das Blockierelement sperrt also nicht länger ein axiales Versetzen der beiden Nuten relativ zueinander. Folglich kann die Abdeckhülse relativ zu dem Befestigungselement aus der Geschlossenstellung heraus versetzt werden.

Gemäß einer Ausführungsform ist die Tiefe der Außennut des Befestigungselements in radialer Richtung bezüglich der Längsachse größer als die Tiefe der Innennut der Abdeckhülse. Die Tiefe der Außennut kann insbesondere einer Ausdehnung des Blockierelements in radialer Richtung entsprechen oder größer sein, wobei diese Ausdehnung bei einem Blockierelement mit kugelartiger Grundform einem Durchmesser des Blockierelements entsprechen kann. Die Tiefe der Außennut und die Tiefe der Innennut sind dabei auf eine Innenmantelfläche der Abdeckhülse bezogen, in der die Innennut ausgebildet ist.

Bei einer Ausführungsform, bei der das Befestigungselement eine Außennut aufweist und die Abdeckhülse eine Innennut aufweist, kann es unabhängig oder ergänzend zu den vorstehenden Ausführungsformen vorteilhaft sein, wenn die Außennut des Befestigungselements und die Innennut der Abdeckhülse in der Geschlossenstellung der Abdeckhülse einen Ringkanal bilden, in dem das Blockierelement frei beweglich gelagert ist. Insbesondere können in der Geschlossenstellung der Abdeckhülse die Außennut und die Innennut aneinander angrenzen, so dass sie gemeinsam den Ringkanal bilden.

Innerhalb des Ringkanals ist das Blockierelement vorzugsweise frei beweglich. Das Blockierelement kann dabei insbesondere nicht lediglich zwischen der Verriegelungsstellung und der Entriegelungsstellung axial und/oder radial zur Längsachse beweglich sein, sondern kann um die Längsachse herum den gesamten Ringkanal durchlaufen. Das trägt dazu bei, dass die Sicherungseinrichtung in beliebiger Drehausrichtung bezüglich der Längsachse an einem Zweirad montiert werden kann. Für die Verriegelungsstellung und die Entriegelungsstellung spielt die Lage des Blockierelements in Umlaufrichtung dabei vorzugsweise keine Rolle. Je nach radialem Abstand des Blockierelements von der Längsachse aber durchdringt das Blockierelement den zylindrischen Trennspalt zwischen dem Befestigungselement und der Abdeckhülse und sperrt so eine axiale Relativbewegung dieser beiden Elemente.

Bevorzugt ist der Ringkanal rotationssymmetrisch zur Längsachse. Der Ringkanal weist also über seinen gesamten Verlauf denselben Radius und Querschnitt auf.

Insbesondere kann der Querschnitt des Ringkanals einen Verlauf des Blockierelements zwischen der Verriegelungsstellung und der Entriegelungsstellung definieren. Dabei kann der Verlauf grundsätzlich geradlinig oder auch zumindest teilweise bogenförmig oder eckig ausgebildet sein. Insbesondere kann der Querschnitt des Ringkanals abschnittsweise oder vollständig schräg, insbesondere in einem Winkel von ca. 45°, zur Längsachse des Befestigungselements ausgerichtet sein. Durch den jeweiligen Verlauf kann dabei kontrolliert werden, bei welchem jeweiligen Winkel im Laufe eines Übergangs aus der Normalausrichtung in die Montageausrichtung bzw. umgekehrt das Blockierelement die Verriegelungsstellung verlässt, bei welchem Winkel es die Entriegelungsstellung einnimmt, bei welchem Winkel es die Entriegelungsstellung verlässt und bei welchem Winkel es die Verriegelungsstellung einnimmt.

Der Querschnitt des Ringkanals weist gemäß einer Ausführungsform eine Längserstreckung auf, entlang der das Blockierelement zwischen der Verriegelungsstellung und der Entriegelungsstellung linear beweglich ist und die schräg, insbesondere in einem Winkel von ca. 45°, zur Längsachse ausgerichtet ist. Dieser Querschnitt kann sich insbesondere aus der Verbindung der beschriebenen Querschnitte der Außennut und der Innennut ergeben. Die schräge Ausrichtung kann dann auf konstruktiv einfache Weise ursächlich für das gravitationsbedingte Bewegen des Blockierelements in die Verriegelungsstellung bzw. die Entriegelungsstellung je nach Ausrichtung der Längsachse des Befestigungselements sein. Die schrägen Seitenflächen des Ringkanals können dabei wie eine Rampe wirken, an der entlang das Blockierelement je nach Kipprichtung der Rampe in jeweils andere Richtung nach unten gleitet.

Gemäß einer bevorzugten Ausführungsform sind mehrere Blockierelemente vorgesehen, die sich aneinandergereiht über zumindest ein Drittel, insbesondere zumindest die Hälfte des Umfangs des Ringkanals erstrecken. Auf diese Weise kann die auf das einzelne Blockierelement wirkende Kraft, wenn bei verriegelter Sicherungseinrichtung versucht wird, die Abdeckhülse in die Offenstellung zu versetzen, verringert werden, da die gesamte Kraft auf die mehreren Blockierelemente verteilt wird.

Die Erfindung wird nachfolgen lediglich beispielhaft unter Bezugnahme auf die Figuren näher erläutert.
- Fig. 1A und 1 B: zeigen eine Ausführungsform einer Befestigungseinrichtung mit einer erfindungsgemäßen Sicherungseinrichtung in einer Seitenansicht bzw. in einem Längsschnitt.
- Fig. 2: zeigt die Sicherungseinrichtung der Fig. 1 in einer teilgeschnittenen Darstellung mit separatem Befestigungselement.
- Fig. 3A bis 3C: zeigen Längsschnitte der Sicherungseinrichtung in unterschiedlichen Zuständen.

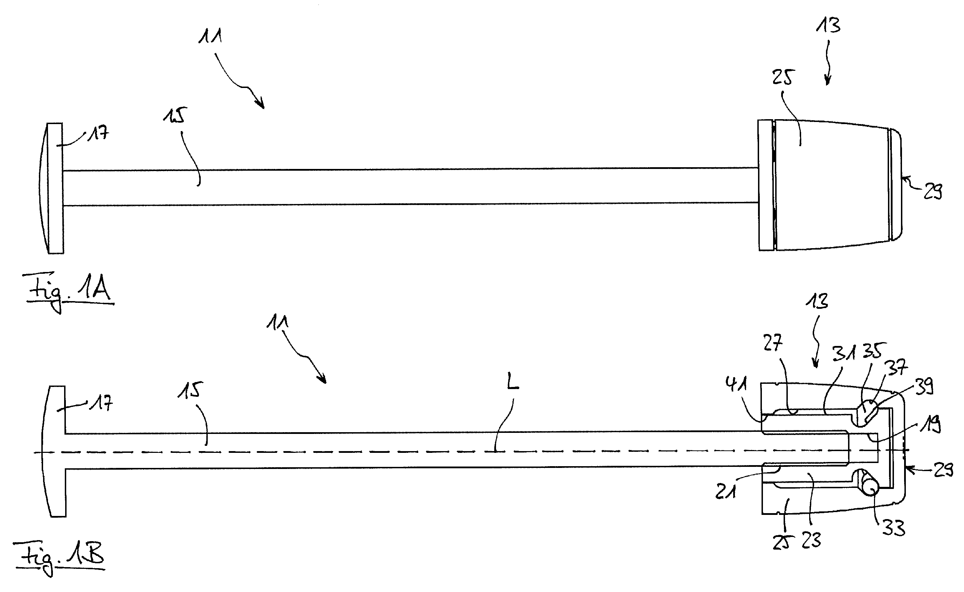

Bei der in Fig. 1 gezeigten Befestigungseinrichtung 11 handelt es sich um die Achse einer Radnabe, die zur Befestigung eines Rades an dem Rahmen, insbesondere an der Gabel, eines Zweirades (nicht dargestellt) verwendet wird. Die Befestigungseinrichtung 11 umfasst eine Sicherungseinrichtung 13, die als Mutter fungiert, sowie als Gegenelement 15 einen als Schraube fungierenden länglichen Stift, der an seinem von der Sicherungseinrichtung 13 weg weisenden Ende einen flachen Kopf 17 aufweist. Der Kopf 17 umfasst in an sich bekannter Weise einen nicht dargestellten Vorsprung, um in eine entsprechende Ausnehmung an der Gabel einzugreifen, so dass der Kopf 17 im Wesentlichen drehfest an der Gabel angeordnet werden kann.

Die Sicherungseinrichtung 13 weist eine Gewindebohrung 19 mit Innengewinde auf, in die der Stift 15 über ein entsprechendes Außengewinde 21 unterschiedlich tief eingeschraubt werden kann. Dadurch kann der Abstand zwischen dem Kopf 17 und der Sicherungseinrichtung 13 verändert werden, um die Befestigungseinrichtung 11 auf an sich bekannte Weise stabil zwischen die beiden Enden der Gabel einzuspannen.

Die Befestigungseinrichtung 11 ist im Wesentlichen rotationssymmetrisch zu einer Längsachse L ausgebildet. Wenn die Befestigungseinrichtung 11 montiert ist, und sich das Zweirad in der üblichen Gebrauchsstellung befindet, ist die Längsachse L wie in Fig. 1 dargestellt horizontal ausgerichtet. Diese Ausrichtung entspricht insofern einer Normalausrichtung der Längsachse L.

Wie die Längsschnittdarstellung der Fig. 1 B zeigt, ist die Sicherungseinrichtung 13 mehrteilig ausgebildet und umfasst ein Befestigungselement 23, welches die Gewindebohrung 19 aufweist, sowie eine auf das Befestigungselement 23 aufgesetzte Abdeckhülse 25. Die Abdeckhülse 25 weist eine zylinderartige Grundform auf. Ein Aufnahmeabschnitt 27 erstreckt sich ausgehend von einem axialen Ende der Abdeckhülse 25 parallel zur Längsachse L in die Abdeckhülse 25 hinein. Das andere axiale Ende der Abdeckhülse 25 ist durch eine Stirnfläche 29 verschlossen.

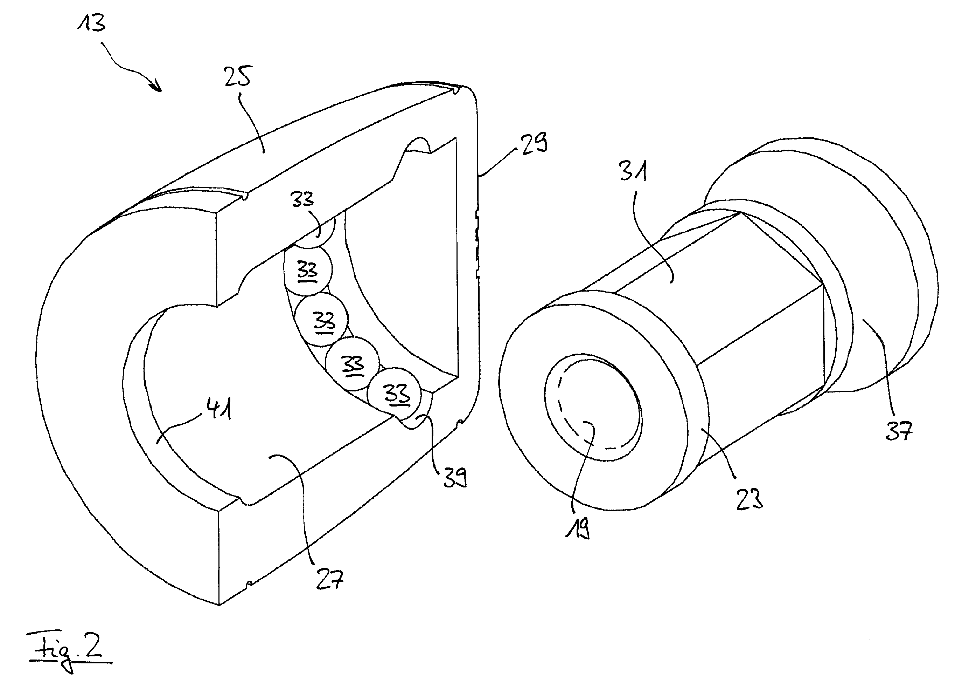

Das Befestigungselement 23 ist in der gezeigten Geschlossenstellung der Abdeckhülse 25 vollständig in dem Aufnahmeabschnitt 27 aufgenommen. Insbesondere wird dadurch auch ein an einer Außenumfangsfläche des Befestigungselements 23 ausgebildeter Angriffsabschnitt 31 verdeckt, so dass er von außen nicht zugänglich ist. Der Angriffsabschnitt 31 ist als Außensechskant ausgebildet (vgl. Fig. 2) und ermöglicht grundsätzlich, das Befestigungselement 23 mittels eines entsprechenden Schraubenschlüssels (nicht dargestellt) um die Längsachse L zu drehen, um es mit dem Gegenelement 15 zu verbinden bzw. davon zu lösen.

Die Abdeckhülse 25 ist frei um die Längsachse L drehbar an dem Befestigungselement 23 gelagert. Das Befestigungselement 23 kann daher nicht mittels der Abdeckhülse 25 von dem Gegenelement 15 abgeschraubt werden. Da die Sicherungseinrichtung 13 mit dem offenen axialen Ende der Abdeckhülse 25 an der Gabel anliegt, wenn die Befestigungseinrichtung 11 auf übliche Weise verwendet wird, ist das Befestigungselement 23 auch von dieser Seite nicht zugänglich. Ein Lösen des Befestigungselements 23 von dem Gegenelement 15 ist daher nur möglich, wenn die Abdeckhülse 25 axial in von dem Gegenelement 15 wegweisender Richtung in ihre Offenstellung versetzt wird und so der Angriffsabschnitt 31 des Befestigungselements 23 für eine Betätigung zugänglich wird.

Ein Versetzen der Abdeckhülse 25 in die Offenstellung wird jedoch durch Blockierelemente 33 in Form von Kugeln verhindert, die in einem Ringkanal 35 zwischen dem Befestigungselement 23 und der Abdeckhülse 25 grundsätzlich frei beweglich gelagert sind, wie nachfolgend näher erläutert wird. Insgesamt sind zehn Blockierelemente 33 vorgesehen, die sich aneinandergereiht über etwas mehr als die Hälfte des Umfangs des Ringkanals 35 erstrecken. In der Normalstellung der Längsachse L füllen die Blockierelemente 33 daher gravitationsbedingt jeweils die untere Hälfte des Ringkanals 35 aus.

Der Ringkanal 35 wird durch eine an dem Befestigungselement 23 ausgebildete, um die Längsachse L umlaufende Außennut 37 sowie eine an der Abdeckhülse 25 ausgebildete, um die Längsachse L umlaufende Innennut 39 gebildet (vgl. insbesondere Fig. 2). Der Querschnitt (bezüglich der Umfangsrichtung) des Ringkanals 35 weist eine Längserstreckung auf, die in einem Winkel von 45° zur Längsachse L ausgerichtet ist. Daher sind die Blockierelemente 33 entlang dieser Längserstreckung, also gleichzeitig sowohl radial als auch axial, zwischen zwei Grenzstellungen beweglich.

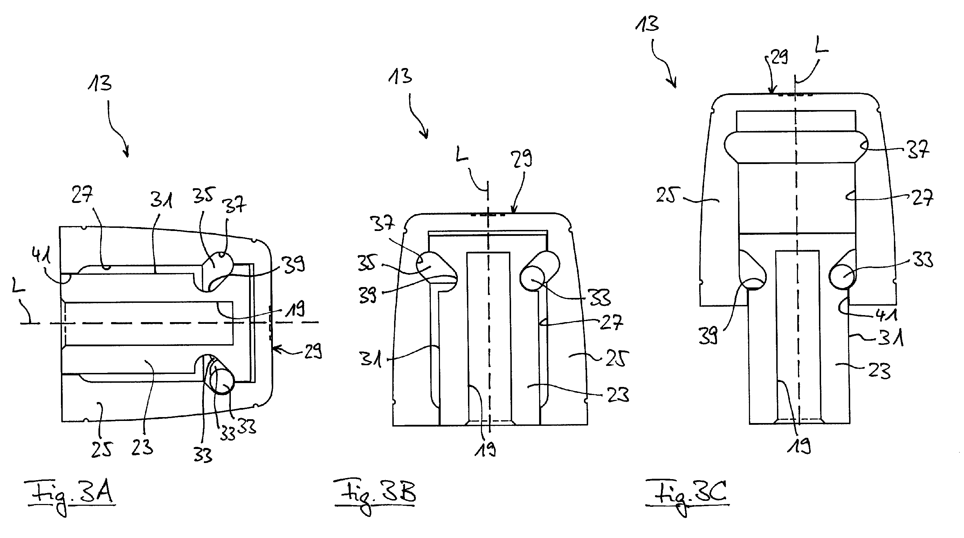

In der in Fig. 1 gezeigten Normalausrichtung der Längsachse L nehmen zumindest die Blockierelemente 33, die sich unterhalb der Längsachse L befinden, (bei der dargestellten Ausführungsform also alle Blockierelemente 33) aufgrund der Gravitation diejenige Grenzstellung ein, die radial weiter von der Längsachse L beabstandet ist. In dieser Stellung durchdringen die die Blockierelemente 33 den Trennspalt zwischen dem Befestigungselement 23 und der Abdeckhülse 25 und greifen daher sowohl in die Außennut 37 als auch in die Innennut 39 ein, wie insbesondere in Fig. 3A zu erkennen ist. Dadurch sperren die Blockierelemente 33 im Zusammenwirken mit einer Seitenfläche der Außennut 37 und einer axial entgegengesetzten Seitenfläche der Innennut 39 ein axiales Bewegen der Abdeckhülse 25 in deren Offenstellung. Bei dieser Grenzstellung handelt es sich folglich um die Verriegelungsstellung der Blockierelemente 33.

Die andere durch die Längserstreckung des Ringkanals 35 zugängliche Grenzstellung ist radial näher zur Längsachse L und axial weiter in Richtung zum Gegenelement 15 angeordnet. Diese Grenzstellung wird daher gravitationsbedingt dann eingenommen, wenn die Sicherungseinrichtung 13 derart ausgerichtet wird, dass die Längsachse L des Befestigungselements 23 die in Fig. 3B gezeigte Montageausrichtung einnimmt. In dieser Ausrichtung ist die Längsachse L vertikal ausrichtet, wobei die Sicherungseinrichtung 13 vertikal über dem Gegenelement 15 angeordnet ist. Die dabei von den Blockierelementen 33 gravitationsbedingt eingenommene Grenzstellung stellt die Entriegelungsstellung der Blockierelemente 33 dar, da die Blockierelemente 33 in dieser Stellung zwar in der Außennut 37 des Befestigungselements 23 zumindest teilweise aufgenommen sind, aber nicht in die Innennut 39 der Abdeckhülse 25 eingreifen. Folglich ist die Sperrung der Abdeckhülse 25 aufgehoben, so dass die Abdeckhülse 25 in die in Fig. 3C gezeigte Offenstellung versetzt werden kann.

In dieser Offenstellung ist der Angriffsabschnitt 31 des Befestigungselements 23 dann frei zugänglich, so dass das Befestigungselement 23 über eine Betätigung des Angriffsabschnitts 31 von dem Gegenelement 15 abgeschraubt werden kann. Dies kann insbesondere mittels eines geeigneten Schraubenschlüssels erfolgen. Grundsätzlich kann das Befestigungselement 23 aber auch dazu ausgebildet sein, werkzeuglos von dem Gegenelement 15 gelöst.

Wie insbesondere in Fig. 3C zu erkennen ist, weist der Aufnahmeabschnitt 27 eine Durchmesserverringerung 41 auf, die in der Offenstellung an den Blockierelementen 33 anschlägt. Dadurch wird verhindert, dass sich die Abdeckhülse 25 vollständig von dem Befestigungselement 23 lösen und verloren gehen kann.

### Bezugszeichenliste

- 11: Befestigungseinrichtung
- 13: Sicherungseinrichtung
- 15: Gegenelement
- 17: Kopf
- 19: Gewindebohrung
- 21: Außengewinde
- 23: Befestigungselement
- 25: Abdeckhülse
- 27: Aufnahmeabschnitt
- 29: Stirnfläche
- 31: Angriffsabschnitt
- 33: Blockierelement
- 35: Ringkanal
- 37: Außennut
- 39: Innennut
- 41: Durchmesserverringerung

- L: Längsachse

## Patentansprüche

1. Sicherungseinrichtung (13) zur Sicherung einer Komponente an einem Objekt, insbesondere an einem Zweirad, umfassend
ein Befestigungselement (23) mit einem Angriffsabschnitt (31) und einer Längsachse (L), wobei das Befestigungselement (23) durch Betätigung des Angriffsabschnitts (31) wahlweise mit einem Gegenelement (15) verbindbar ist, um in einem verbundenen Zustand die Komponente an dem Objekt zu befestigen und in einem gelösten Zustand die Komponente für ein Lösen von dem Objekt freizugeben;
und eine Abdeckhülse (25), die zwischen einer Geschlossenstellung, in der die Abdeckhülse (25) eine Betätigung des Angriffsabschnitts (31) verhindert, und einer Offenstellung, in der die Abdeckhülse (25) eine Betätigung des Angriffsabschnitts (31) zulässt, beweglich an dem Befestigungselement (23) gelagert ist;
wobei zwischen dem Befestigungselement (23) und der Abdeckhülse (25) zumindest ein Blockierelement (33) vorgesehen ist, welches in der Geschlossenstellung der Abdeckhülse (25) zwischen einer Verriegelungsstellung, in der es die Abdeckhülse (25) in der Geschlossenstellung sperrt, und einer Entriegelungsstellung, in der es ein Bewegen der Abdeckhülse (25) in die Offenstellung zulässt, frei beweglich ist;
wobei das Blockierelement (33) derart zwischen dem Befestigungselement (23) und der Abdeckhülse (25) gelagert ist, dass es, wenn sich die Abdeckhülse (23) in der Geschlossenstellung befindet, in einer Normalausrichtung der Längsachse (L) des Befestigungselements (23) gravitationsbedingt die Verriegelungsstellung einnimmt und in einer zu der Normalausrichtung senkrechten Montageausrichtung der Längsachse (L) des Befestigungselements (23) gravitationsbedingt die Entriegelungsstellung einnimmt.

2. Sicherungseinrichtung nach Anspruch 1,
wobei das Blockierelement (33) derart zwischen dem Befestigungselement (23) und der Abdeckhülse (25) gelagert ist, dass es die Verriegelungsstellung und die Entriegelungsstellung jeweils unabhängig von einer Drehausrichtung des Befestigungselements (23) relativ zu der Längsachse (L) einnimmt.

3. Sicherungseinrichtung nach Anspruch 1 oder 2,
wobei die Längsachse (L) des Befestigungselements (23) in der Normalausrichtung in horizontaler Richtung verläuft und in der Montageausrichtung in vertikaler Richtung verläuft.

4. Sicherungseinrichtung nach zumindest einem der vorstehenden Ansprüche, wobei die Abdeckhülse (25) entlang der Längsachse (L) des Befestigungselements (23) zwischen der Geschlossenstellung und der Offenstellung beweglich an dem Befestigungselement (23) gelagert ist.

5. Sicherungseinrichtung nach zumindest einem der vorstehenden Ansprüche, wobei die Abdeckhülse (25) einen Aufnahmeabschnitt (27) aufweist, in den das Befestigungselement (23) aufgenommen ist,
und wobei der Angriffsabschnitt (31) des Befestigungselements (23) in der Geschlossenstellung vollständig in dem Aufnahmeabschnitt (27) der Abdeckhülse (25) aufgenommen ist.

6. Sicherungseinrichtung nach Anspruch 5,
wobei der Aufnahmeabschnitt (27) eine Durchmesserverringerung (41) aufweist, gegen die das Blockierelement (33) anschlägt, wenn die Abdeckhülse (25) in der Offenstellung ist, um ein Lösen der Abdeckhülse (25) von dem Befestigungselement (23) zu verhindern.

7. Sicherungseinrichtung nach zumindest einem der vorstehenden Ansprüche, wobei das Befestigungselement (23) dazu ausgebildet ist, zur Verbindung mit dem Gegenelement (15) um die Längsachse (L) gedreht zu werden; und/oder
wobei die Abdeckhülse (25) frei um die Längsachse (L) drehbar an dem Befestigungselement (23) gelagert ist.

8. Sicherungseinrichtung nach zumindest einem der vorstehenden Ansprüche, wobei sich die Verriegelungsstellung und die Entriegelungsstellung des Blockierelements (33) sowohl hinsichtlich ihrer radialen als auch hinsichtlich ihrer axialen Anordnung relativ zu der Längsachse (L) unterscheiden; und/oder
wobei die Verriegelungsstellung und die Entriegelungsstellung des Blockierelements (33) in Bezug auf die Längsachse (L) schräg, insbesondere in einem Winkel von ca. 45°, zueinander ausgerichtet sind.

9. Sicherungseinrichtung nach zumindest einem der vorstehenden Ansprüche, wobei das Befestigungselement (23) eine um die Längsachse (L) umlaufende Außennut (37) aufweist, die dazu ausgebildet ist, das Blockierelement (33) zumindest teilweise aufzunehmen,
wobei vorzugsweise ein Querschnitt der Außennut (37) eine Längserstreckung aufweist, die bezüglich der Längsachse (L) des Befestigungselements (23) zumindest abschnittsweise schräg, insbesondere in einem Winkel von ca. 45°, ausgerichtet ist.

10. Sicherungseinrichtung nach zumindest einem der vorstehenden Ansprüche, wobei die Abdeckhülse (25) eine um die Längsachse (L) umlaufende Innennut (39) aufweist, die dazu ausgebildet ist, das Blockierelement (33) zumindest teilweise aufzunehmen,
wobei vorzugsweise ein Querschnitt der Innennut (39) eine Längserstreckung aufweist, die bezüglich der Längsachse (L) des Befestigungselements (23) zumindest abschnittsweise schräg, insbesondere in einem Winkel von ca. 45°, ausgerichtet ist.

11. Sicherungseinrichtung nach den Ansprüchen 9 und 10,
wobei das Blockierelement (33) teilweise in der Außennut (37) des Befestigungselements (23) und teilweise in der Innennut (39) der Abdeckhülse (25) aufgenommen ist, wenn sich die Abdeckhülse (25) in der Geschlossenstellung befindet und sich die Längsachse (L) des Befestigungselements (23) in der Normalausrichtung befindet.

12. Sicherungseinrichtung nach Anspruch 11,
wobei das Blockierelement (33) in der Außennut (37) des Befestigungselements (23) zumindest teilweise aufgenommen ist, ohne in die Innennut (39) der Abdeckhülse (25) einzugreifen, wenn sich die Längsachse (L) des Befestigungselements (23) in der Montageausrichtung befindet.

13. Sicherungseinrichtung nach den Ansprüchen 9 und 10 oder nach Anspruch 11 oder nach Anspruch 12,
wobei die Außennut (37) des Befestigungselements (23) und die Innennut (39) der Abdeckhülse (25) in der Geschlossenstellung der Abdeckhülse (25) einen Ringkanal (35) bilden, in dem das Blockierelement (33) frei beweglich gelagert ist.

14. Sicherungseinrichtung nach Anspruch 13,
wobei der Ringkanal (35) rotationssymmetrisch zur Längsachse (L) ist; und/oder
wobei ein Querschnitt des Ringkanals(35) eine Längserstreckung (L) aufweist, entlang der das Blockierelement (33) zwischen der Verriegelungsstellung und der Entriegelungsstellung linear beweglich ist und die schräg, insbesondere in einem Winkel von ca. 45°, zu der Längsachse (L) ausgerichtet ist;
und/oder
wobei mehrere Blockierelemente (33) vorgesehen sind, die sich aneinandergereiht über zumindest ein Drittel, insbesondere zumindest die Hälfte des Umfangs des Ringkanals (35) erstrecken.

15. Befestigungseinrichtung (11) zur Befestigung einer Komponente an einem Objekt, insbesondere einem Zweirad,
umfassend eine Sicherungseinrichtung (13) nach zumindest einem der vorstehenden Ansprüche
sowie das Gegenelement (15), mit dem das Befestigungselement (23) wahlweise verbindbar ist, um in einem verbundenen Zustand die Komponente an dem Objekt zu befestigen und in einem gelösten Zustand die Komponente für ein Lösen von dem Objekt freizugeben.
